# EUROPEAN PATENT SPECIFICATION

(11) **EP 1 495 255 B1**
(45) Date of publication and mention of the grant of the patent: **31.10.2007**
(21) Application number: 03745364.4
(22) Date of filing: 25.03.2003
(51) Int. Cl.: F16M 1/00, B01F 13/10

(54) **MACHINE STRUCTURE, IN PARTICULAR FOR HANDLING FLUID PRODUCTS, AND PROCESS FOR ASSEMBLING IT**
MASCHINENKONSTRUKTION, INSBESONDERE ZUR HANDHABUNG VON FLUIDPRODUKTEN UND VERFAHREN ZU IHRER MONTAGE
STRUCTURE DE MACHINE, DESTINEE EN PARTICULIER AU TRAITEMENT DE PRODUITS FLUIDES, ET PROCEDURE DE MONTAGE DE CETTE STRUCTURE

(30) Priority: 28.03.2002 IT BO20020160
(43) Date of publication of application: 12.01.2005
(73) Proprietor: CPS Color Equipment S.p.A. con unico socio, 41038 San Felice sul Panaro, MO (IT)
(72) Inventor: GRECO, Guido, 41038 S. Felice sul Panaro (Modena) (IT); FIFIELD, Bruce, 20135 Milano (IT)
(74) Representative: Petraz, Gilberto Luigi
(86) International application number: PCT/IB2003/001160
(87) International publication number: WO 2003/083349

(56) References cited:
- EP-A- 1 093 842
- WO-A-99/19628
- US-A- 3 307 894
- US-A- 4 309 365
- US-A- 4 354 330

## Description

This invention relates to a machine structure, in particular but not restricted to machines for the handling of fluid products. The invention has been developed with particular reference to structures which contain, protect and enclose the mechanisms of machines such as for example machines dispensing dyes or machines mixing fluid products, for example paints, varnishes, enamels, inks and the like contained in cans, drums and containers of that nature. The invention also relates to a process for assembling the above-mentioned structure.

Machines of the type indicated above are normally housed and supported by frame structures which generally comprise bars, cross-members and uprights welded together to form a frame having a particular shape and dimensions. After the mechanical, electronic and working parts of the particular machine have been placed within the frame, this is normally covered with panels secured to the structure of the frame by connection systems of a known type such as screws, bolts and, in some cases, hinges or the like to allow the panels to be at least partly opened so that the components of the machine can be inspected.

One disadvantage of frame structures of the known type indicated above lies in the fact that these are not particularly flexible in construction and therefore fit with difficulty into cramped spaces, such for example the points of sale where such machines have to be used. Normally, machines of the known type have a one-piece structure with little modularity and are not particularly pleasing from the aesthetic point of view.

Another disadvantage of machine structures of the known type comprises the fact that they must be assembled and set up in the workshop and then transported in the assembled state to the place where they will be used, with a consequent increase in costs and times for transport.

Furthermore, a structure comprising a loadbearing frame including uprights and one or more covering panels in accordance with the preamble of independent claim 1 of the present invention, is already known from US-A-4 309 365.

The purpose of this invention is to overcome the problems of the known art and in particular to provide a machine structure and a process for assembling it which is simple, economical and easy to apply in the place where the machine is used, even by not particularly specialised personnel.

Another purpose of this invention is to provide a machine structure which when assembled is of small size and can be easily and flexibly adapted to the special space, shape and positioning requirements of all places where the machine is in use.

In order to achieve the above-mentioned purposes this invention relates to a machine structure according to claim 1.

The invention also relates to a special kit and procedure for assembling the above-mentioned structure having the features indicated in claims 13 and 14 below respectively.

An advantage of this invention which derives from its modular nature and the easy assembly of the machine structure is the possibility of quickly and simply hooking on and replacing the covering panels which form the sides of the structure. In this way the machine structure can be personalised with very little effort, so that its aesthetic features can be matched to the special environment in which it has to be placed. In addition to this side panels can be constructed with slogans or inscriptions and advertising images, which are easily replaceable and interchangeable, for example for the promotion of special events, offers, bargains and the like.

Another advantageous feature of this invention lies in its ergonomic nature, and in particular its especially convenient configuration for use by a standing operator. The features of the structure according to this invention make it possible to adjust it quickly and effectively to any special anthropometric characteristics of the operator, merely by altering the height of the uprights, without thereby having to act on the other parts of the machine structure.

According to a further particularly advantageous feature the structure according to this invention has three uprights and has a substantially triangular configuration in plan, having sides with convexity away from the machine. In addition to being aesthetically attractive this configuration constitutes a very useful solution for locating the machine structure in the corner of a room, so as to make the optimum use of space and nevertheless provide a wide frontal surface for access to the machine.

In a possible configuration of the machine structure according to the invention it is provided that a first plate should be secured to the top ends of the uprights and the second plate should be secured to a middle zone of these uprights. In this way the machine and its mechanical components are raised off the ground, in an ergonomic position for an erect operator. The empty space beneath the second plate can be used as a locker, and in this case the zone lying beneath the second plate can advantageously be at least partly covered laterally by side panels which extend to the ground from the tops of the uprights.

The machine structure according to this invention can be advantageously used to house a complex of dispensing units for colouring agents of a generally known type, for example of the type described in document EP-A-1030972. In this case the tanks of colouring agent for each dispensing unit can be attached suspended to the first upper plate of this invention.

In the case where the structure according to this invention houses the mechanisms of a dispensing machine, the dispensing zone may comprise a recess in the panel or panels covering the front part. In this way the overall dimensions of the machine, especially in plan, remain small, and in addition to this protection is provided for the dispensing nozzle.

In accordance with a further advantageous feature of this invention it is possible to provide a supporting plane for containers of colouring agent, designed to receive the product delivered, constituting for example a table which is preferably mounted to hinge against or disappear beneath the dispensing zone.

Other advantages and characteristics of the present invention will become clear from the following detailed description which is given with reference to the appended drawings which are provided purely by way of non-limiting example and in which:
- Figure 1 is a perspective view of a first embodiment of a machine structure according to this invention,
- Figure 2 is a perspective view of another possible embodiment of a machine structure according to the invention,
- Figure 3 is a perspective view similar to that in Figure 1, illustrating the machine structure without its side covering panels,
- Figure 4 is a transverse cross-section through the structure in Figure 1,
- Figure 5 is a view in lateral elevation of a variant of this invention which for clarity of illustration is shown without the covering side panels,
- Figure 6 is a view along arrow VI in Figure 5,
- Figure 7 is a perspective and exploded view of the structure in Figures 5 and 6, and
- Figure 8 is a transverse cross-section on a magnified scale of the upright for the machine structure in Figures 5 to 7.

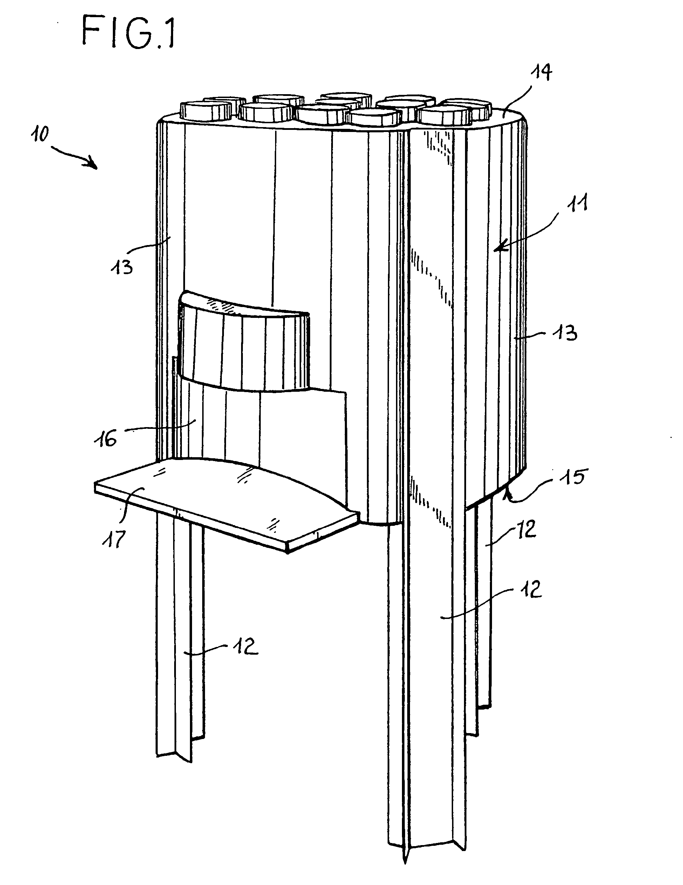

With reference now to Figure 1, a machine structure 10 comprises a loadbearing frame 11 which includes substantially vertical uprights 12 supported on the ground to support the machine structure. As a whole the machine mechanisms, of a type which is generally known and which are therefore not further described and discussed in this description, are housed in the space bounded by side panels 13, preferably hooked onto uprights 12, an upper plate 14 and a lower plate 15.

Depending upon the type and configuration of the machine components and mechanisms intended to be housed in structure 10, an access space or a working area, for example comprising a supporting plane 17, preferably mounted so that it can be drawn out with respect to the front part 16 of the machine structure may be provided in the frontal zone 16 of structure 10.

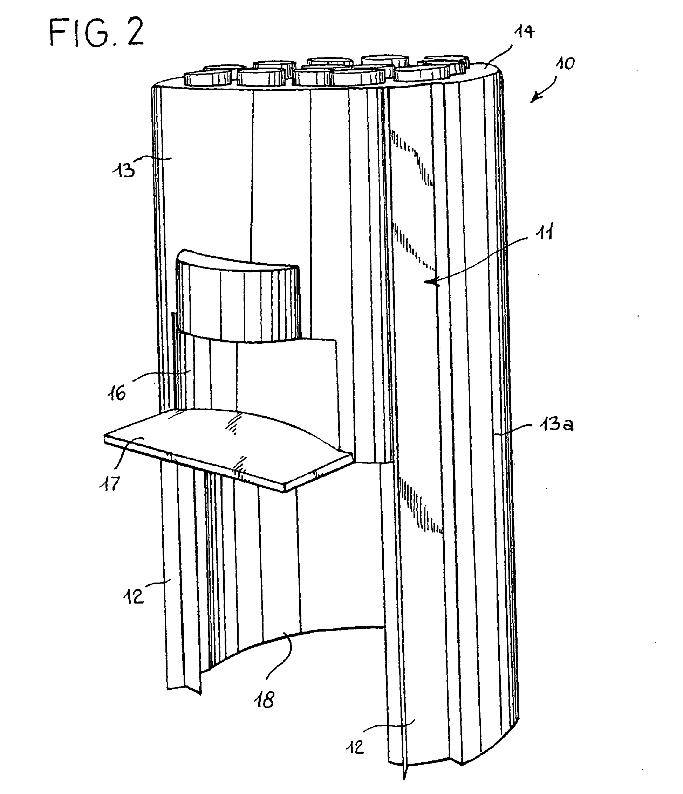

Figure 2 shows a different embodiment of structure 10 for machines in which one or more side panels 13a extend from the upper end of uprights 12 to the ground, substantially forming a semi-enclosed space 18 below lower plate 15 which forms the lower boundary for the zone housing the machine components.

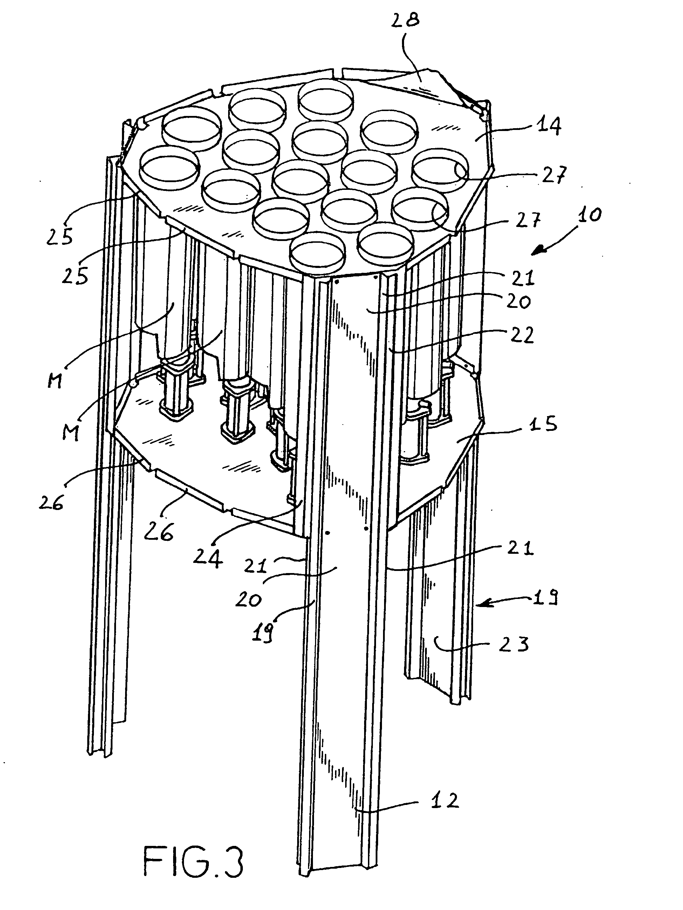

As it will be better seen in Figure 3, in the preferred embodiment of the invention each upright 12 comprises a principal portion 19 which extends from the ground to the very top of machine structure 10. Principal portion 19 is preferably of a folded shape, having a flat central back 20 from which two wings 21 which are folded at their edges to form a longitudinal hook 22 extend laterally. A second portion 23 of upright having a shape which substantially corresponds to that of principal portion 19 and to which it is fixed back to back preferably extends from the ground to a median zone of principal portion 19, at which point lower plate 15 is fitted. Upper plate 14 is also fixed to uprights 12, and in particular at the tops of the principal portions 19 of uprights 12. Between plates 14, 15 and each upright 12 there is placed a folded plate 24 which together with wings 25, 26 provided along the perimeter of each plate 14, 15 comprises a stop for the side panels 13, 13a of machine structure 10.

In the particular embodiment illustrated in Figure 3, machine structure 10 is designed to receive a number of machine units M having reservoirs suspended on upper plate 14 through a plurality of shaped openings 27 made in the latter. A particular number of shaped openings 27 may be provided in plate 14 in advance at the time of its manufacture and any shaped openings 27 which exceed the number of machine components M actually fitted on the machine can be covered by a film or sheet 28.

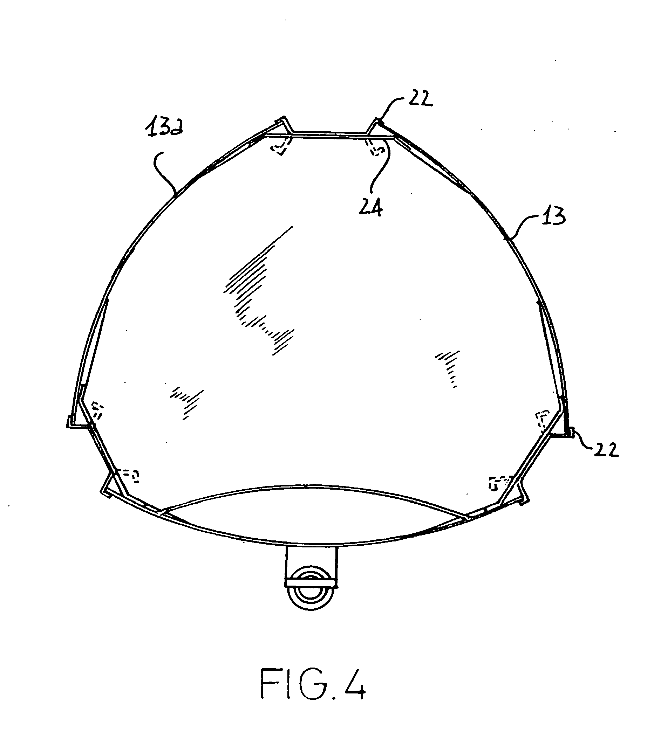

Figure 4 clearly shows the function of longitudinal hooks 22 of uprights 12 and the manner in which they act together with corner plates 24 to secure restrainingly support side panels 13, 13a and at the same time impart to them a curvature with a convexity away from the zone in which the components of machine M are housed.

Machine structure 10 described above can easily be delivered to the point of final use in a dismantled state. In particular an assembly kit comprising uprights 12, preferably but not limited in number to three, the two plates 14 and 15, a particular number of machine components M intended to be housed in machine structure 10, side panels 13, 13a and the connecting components (screws, bolts, nuts, washers, etc.) normally provided for the assembly of structures in kit form can be supplied.

At the time of assembly it is only necessary to secure the two plates 14, 15 to uprights 12. In particular upper plate 14 is secured close to one end of each upright 12, while lower plate 15 is secured at a predetermined distance from the aforesaid end of each upright 12. After having housed the components of machine M within the space defined by the two plates 14, 15, in particular suspending the reservoirs illustrated in the embodiment in Figure 3 from upper plate 14 after having caused them to pass through shaped openings 27, it is only necessary to cover the sides of machine structure 10 with side panels 13 restrained between two adjacent uprights 12. Side panels 13 are preferably held in a covering position by longitudinal hooks 22 provided on the uprights and/or a set of channels or hooks or other means of connection provided on the periphery of plates 14, 15.

If necessary, uprights 12 can also be shortened at the place where machine structure 10 will finally be used in order to make the height of the machine structure suitable for the particular dimensions of the location or the anthropometric measurements of the final user. In some cases it is possible to fit lower plate 15 close to or at the ends of uprights 12 opposite those to which upper plate 14 is fixed, thus forming a completely enclosed machine structure 10 which is particularly suitable for being supported on a working surface.

In the configurations illustrated in Figures 1 and 2, in which lower plate 15 is secured in an intermediate zone of uprights 12, the zone beneath lower plate 15 can also usefully be used to house other working machines, such as for example a machine mixing the fluid products which are to be used in combination with any machine dispensing the fluid products and/or colouring agents housed within frame 11 and protected by side walls 13, 13a, in addition to objects of various kinds.

Again in the configurations illustrated in Figures 1 and 2, supporting plane 17 is preferably mounted so that it can be drawn out from the lower surface of lower plate 15, so that it can be drawn therefrom when necessary to support containers of colouring agent in the delivery zone. Supporting plane 17 can then be caused to disappear beneath plate 15 when not in use in order to reduce the frontal dimensions of the machine structure. Of course this advantage may be obtained using equivalent solutions, for example with a supporting plane of the tilting type, hinged to the machine structure.

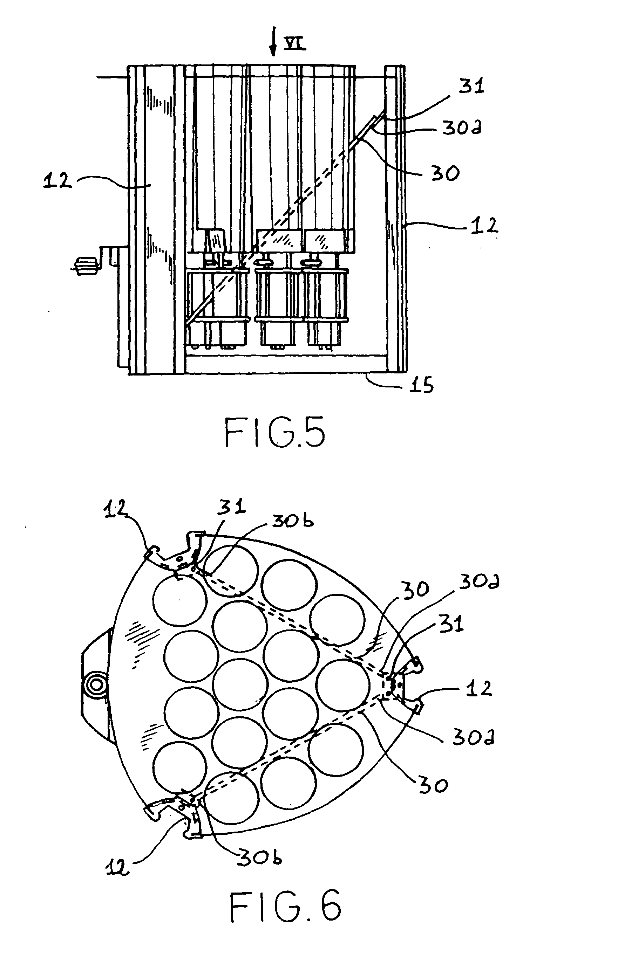

Figures 5, 6 and 7 illustrate a second preferred embodiment of machine structure 10, in which the same reference numbers are used to indicate parts corresponding to those previously described. Within the zone housing the components of machine M there are placed bracing ties 30, preferably two in number, in order to stiffen the structure as a whole. The two ties 30 preferably but not limited thereto both have one of their ends 30a connected to the same upright 12 through a connection plate 31 or other similar means of connection, while their opposite ends 30b are each respectively connected in a similar way to one of the other uprights 12.

In the embodiment illustrated in Figures 5, 6 and 7, lower plate 15 is mounted on the opposite end of uprights 12 to that to which plate 14 is secured. In this way machine structure 10 is particularly suitable for being supported on working surfaces, benches or shelves already present at the place where the machine structure is to be installed. On its front, the machine structure comprises a first panel 13b, of a lesser height than side panels 13. Below front panel 13b is located another panel 35 to complete covering of the front part of the machine structure. Lower panel 35 is re-entrant towards the zone where the components of machine M are housed, in relation to overlying panel 13b, so as to form a space to define a dispensing zone. Behind front panel 13b it is possible to house a support 47 fixed laterally to uprights 12 on which for example are placed devices 48 to control the components of machine M and if necessary to display the operating status of the same.

A shape 36 is made in panel 13b to allow the dispensing nozzle of the machine to project. A cap 37, overlying the upper part thereof and following shape 36, is then provided for protection of the nozzle. A shaped plate 38 is located horizontally to connect lower panel 35 and front panel 13b, and has a hole 32 for the dispensing nozzle. Below shaped plate 38 is preferably connected a device for moistening nozzles 39, commonly known as an "autocap", for example of the type which is the subject matter of patent US-A-5842641 by the same applicant, the description of which is understood to be incorporated here for reference.

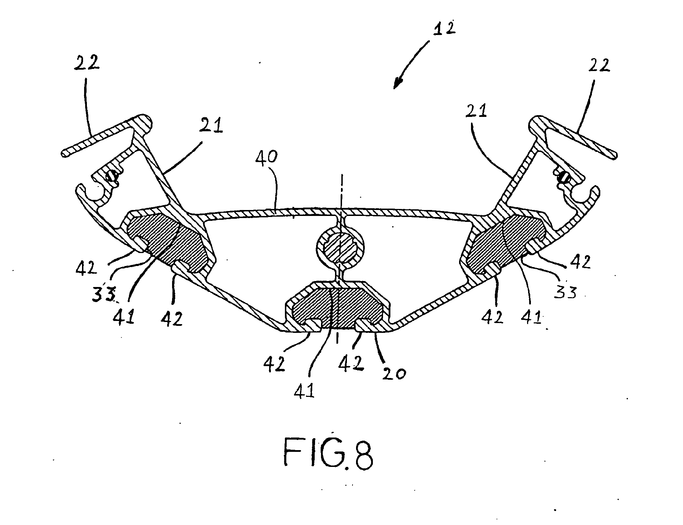

In this variant uprights 12 are each constructed of a single component whose preferred cross-section, though without being restricted thereto, is illustrated in Figure 8. This cross-section has a first closed central portion 40 flanked by wings 21, also closed, on each of which is provided a longitudinal hook 22. On the back 20 of central portion 40, as also in the connection zone between central portion 40 and wings 21, there are shaped channels 41 which extend longitudinally over the entire length of the upright. The cross-sections of channels 41 are such as to receive securing components such as nuts and the like, and have appendages 42 which retain such securing components, at the same time forming openings 33 for passage of the shanks of bolts and the like (not illustrated) for holding lower and upper plates 14 and 15 in position. By slackening off the securing components which are partly engaged in shaped channels 41 it is possible to adjust the longitudinal positions of the plates and position them at a desired height along uprights 12.

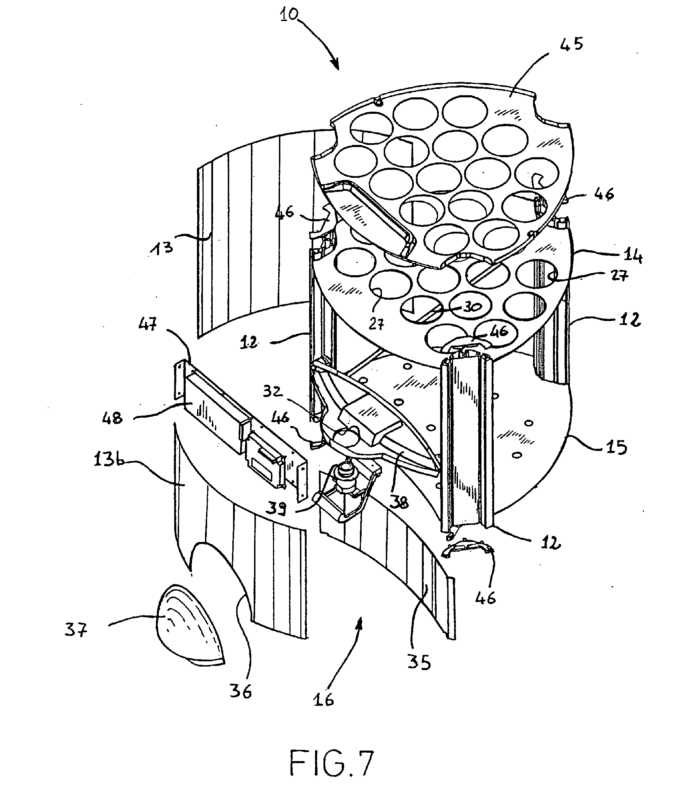

As shown in Figure 7, shaped openings 27 provided in upper plate 14 can be at least partly covered by a rigid shaped plate 45 positioned at the top of machine structure 10. As already described above with reference to covering sheet 28 in Figure 3, only the shaped openings 27 actually used for housing the components of machine M can also be provided in rigid plate 45, thus preventing the entry of contaminating agents through the other openings and improving the overall aesthetic appearance of machine structure 10.

Again with the object of improving the appearance of the machine structure, covers 46, shaped according to the cross-section of uprights 12, are inserted into the ends of uprights 12.

Naturally, the principle of the invention remaining the same, the forms of embodiment and details of construction may be varied widely with respect to those described and illustrated, which have been given purely by way of example, without thereby departing from the scope of the claims.

## Claims

1. A machine structure, in particular for a machine for handling fluid products, comprising:
- a loadbearing frame including uprights, and
- one or more covering panels,
the uprights (12) extending in a substantially vertical direction and having an upper end close to or onto which is secured a first substantially horizontal upper plate (14) for connecting the uprights (12), a second substantially horizontal lower plate (15) being secured to the same uprights (12) to connect them in a zone beneath the first upper plate (14), and thus form a zone for housing the mechanism of the machine (M), at least one of the covering panels (13, 13a) being removably fitted between two uprights (12) in a covering position to at least partly cover the housing zone laterally, the uprights (12) having longitudinal connection means (22, 24) for restraining said covering panels (13a, 13a), **characterized in that** said connection means (22, 24) are configured to support under restraint said covering panels (13, 13a) and at the same time to impart to them a curvature with convexity away from the housing zone.

2. A structure according to claim 1, **characterised in that** said connection means comprise longitudinal channel or hooks (22) provided on relative folded wings (21) defining lateral edges of said uprights (12), a panel (13, 13a) being hooked on facing longitudinal channel or hooks (22) of two adjacent uprights (12).

3. A structure according to claim 1 or 2, **characterised in that** said connection means comprise a folded corner plate (24) placed between said horizontal plates (14, 15) and each uprights (12), each of said folded corner plates (24) acting together with wings (25, 26) provided along the perimeter of each of said horizontal plates (14, 15) to define a stop for a relative panel (13, 13a) and, together said longitudinal channel or hooks (22) to impart said curvature with convexity away from the housing zone.

4. A structure according to claim 1, **characterized in that** it comprises three uprights (12).

5. A structure according to any of the preceding claims, **characterized in that** the second plate (15) is secured in a median zone of the uprights (12).

6. A structure according to claim 5, **characterized in that** the covering panels (13, 13a) extend vertically over a distance which is substantially equal to the distance between the two plates (14, 15).

7. A structure according to claim 5, **characterised in that** at least one side panel (13a) extends over a length substantially equal to the height of the upright (12).

8. A structure according to any one of the preceding claims, **characterised in that** it has a frontal zone (16) for working access to the functions of the mechanisms of the machine (M) housed within the structure.

9. A structure according to claim 8, **characterised in that** it has a working surface or support (17) provided in the front zone (16), mounted so that it can be drawn out or moved to disappear, or tilted.

10. A structure according to any one of the preceding claims, **characterised in that** the first upper plate (14) comprised a plurality of shaped openings (27) to house and support components of the machine (M).

11. A structure according to claim 10, **characterised in that** it comprises a covering member (28, 45) located on the first upper plate (14) to at least partly cover one or more shaped openings (27).

12. A structure according to any one of the preceding claims, **characterised in that** it comprises bracing ties (30) which connect the uprights (12) together.

13. An assembly kit for constructing a machine structure according to any one of claims 1 to 12, the structure comprising:
- two or more elongated uprights (12),
- at least two plates (14, 15) connecting the uprights (12), connecting members to secure the plates (14, 15) to the uprights (12) at a predetermined distance, and
- one or more side covering panels (13, 13a) each designed to be restrained between two uprights (12);
**characterised in that** said uprights (12) comprise connection means (22, 24) configured to support under restraint said side panels (13, 13a) and at the same time to impart to them a curvature with convexity away from the housing zone.

14. A process for the assembly of a machine structure according to any one of claims 1 to 12, comprising the stages of:
- mounting the first upper plate (14) close to one end of each upright (12),
- mounting the second plate (15) on uprights (12) at a predetermined distance from the said end of each upright (12),
- mounting the components of machine (M) in the housing zone formed between the first (14) and the second (15) plate, and
- mounting the side covering panels (13, 13a) each between two adjacent uprights (12),
**characterised in that**
each covering panel (13, 13a) is hooked on facing longitudinal channels or hooks (22) provided on a principal portion (19) of two adjacent uprights (12) in order to support under restraint each of said panels (13a, 13a) between said uprights (12) and at the same time impart to them a curvature with a convexity away from the housing zone.

## Patentansprüche

1. Maschinenaufbau, insbesondere für eine Maschine zum Handhaben von Flüssigprodukten, Folgendes umfassend:
- einen tragenden Rahmen mit Ständern, und
- ein oder mehrere Abdeckfeld/er,
wobei sich die Ständer (12) in einer im Wesentlichen vertikalen Richtung erstrecken und ein oberes Ende haben, nahe dem oder auf dem eine erste, im Wesentlichen horizontale obere Platte (14) befestigt ist, um die Ständer (12) zu verbinden, und wobei eine zweite, im Wesentlichen horizontale untere Platte (15) an denselben Ständern (12) befestigt ist, um sie in einem Bereich unterhalb der ersten, oberen Platte (14) zu verbinden und somit einen Bereich zur Aufnahme des Mechanismus der Maschine (M) zu bilden, wobei mindestens eines der Abdeckfelder (13, 13a) abnehmbar zwischen zwei Ständern (12) in einer Abdeckposition angebracht ist, um den Aufnahmebereich zumindest teilweise seitlich abzudecken, wobei die Ständer (12) längsverlaufende Verbindungseinrichtungen (22, 24) haben, um die Abdeckfelder (13, 13a) zurückzuhalten,
**dadurch gekennzeichnet, dass** die Verbindungseinrichtungen (22, 24) dazu ausgelegt sind, die Abdeckfelder (13, 13a) unter Zwangsführung zu halten und ihnen gleichzeitig eine Krümmung mit einer Konvexität vom Aufnahmebereich weg zu verleihen.

2. Aufbau nach Anspruch 1, **dadurch gekennzeichnet, dass** die Verbindungseinrichtungen längsverlaufende U-Profile oder Haken (22) umfassen, die an jeweiligen gefalzten Schenkeln (21) vorgesehen sind, welche die Seitenkanten der Ständer (12) bilden, wobei ein Feld (13, 13a) an einander zugewandten längsverlaufenden U-Profilen oder Haken (22) zweien aneinander angrenzender Ständer (12) eingehakt ist.

3. Aufbau nach Anspruch 1 oder 2, **dadurch gekennzeichnet, dass** die Verbindungs einrichtungen eine gafalzte Eckplatte (24) umfassen, die zwischen den horizontalen Platten (14, 15) und jedem der Ständer (12) eingesetzt ist, wobei die gefalzten Eckplatten (24) mit Schenkeln (25, 26) zusammenwirken, die entlang des Umfangs jeder der horizontalen Platten (14, 15) vorgesehen sind, um einen Anschlag für ein jeweiliges Feld (13, 13a) zu bilden und ihm zusammen mit den längsverlaufenden U-Profilen oder Haken (22) die Krümmung mit einer Konvexität vom Aufnahmebereich weg zu verleihen.

4. Aufbau nach Anspruch 1, **dadurch gekennzeichnet, dass** er drei Ständer (12) umfasst.

5. Aufbau nach einem der vorhergehenden Ansprüche, **dadurch gekennzeichnet, dass** die zweite Platte (15) in einem mittleren Bereich der Ständer (12) befestigt ist.

6. Aufbau nach Anspruch 5, **dadurch gekennzeichnet, dass** die Abdeckfelder (13, 13a) sich vertikal über einen Abstand erstrecken, der im Wesentlichen gleich dem Abstand zwischen den beiden Platten (14, 15) ist.

7. Aufbau nach Anspruch 5, **dadurch gekennzeichnet, dass** sich zumindest ein Seitenfeld (13a) über eine Länge erstreckt, die im Wesentlichen gleich der Höhe des Ständers (12) ist.

8. Aufbau nach einem der vorhergehenden Ansprüche, **dadurch gekennzeichnet, dass** er einen Frontbereich (16) für einen Arbeirszugriff auf die Funktionen des im Aufbau untergebrachten Mechanismus der Maschine (M) hat.

9. Aufbau nach Anspruch 8, **dadurch gekennzeichnet, dass** er eine im Frontbereich (16) vorgesehene Arbeitsfläche oder -auflage (17) hat, die so angebracht ist, dass sie herausgezogen oder versenkt oder gekippt werden kann.

10. Aufbau nach einem der vorhergehenden Ansprüche, **dadurch gekennzeichnet, dass** die erste, obere Platte (14) mehrere geformte Öffnungen (27) umfasst, um Bauteile der Maschine (M) aufzunehmen und zu halten.

11. Aufbau nach Anspruch 10, **dadurch gekennzeichnet, dass** et ein Abdeckteil (28, 45) umfasst, das sich auf der ersten, oberen Platte (14) befindet, um eine oder mehrere geformte Öffnung/en (27) zumindest teilweise abzudecken.

12. Aufbau nach einem der vorhergehenden Ansprüche, **dadurch gekennzeichnet, dass** er Verbindungsstreben (30) umfasst, welche die Ständer (12) miteinander verbinden.

13. Bausatz zum Aufbau eines Maschinenaufbaus nach einem der Ansprüche 1 bis 12,
wobei der Aufbau umfasst:
- zwei oder mehr langgestreckte Ständer (12),
- mindestens zwei Platten (14, 15) welche die Ständer (12) verbinden, Verbindungsteile, um die Platten (14, 15) in einem vorbestimmten Abstand mit den Ständern (12) zu verbinden, und
- ein oder mehrere Seitenabdeckfeld/er (13, 13a), das bzw. die jeweils dazu ausgelegt ist/sind, zwischen zwei Ständern (12) zurückgehalten zu werden;
**dadurch gekennzeichnet, dass** die Ständer (12) Verbindungseinrichtungen (22, 24) umfassen, die dazu ausgelegt sind, die Abdeckfelder (13, 13a) unter Zwangsführung zu halten und ihnen gleichzeitig eine Krümmung mit einer Konvexität vom Aufnahmebereich weg zu verleihen.

14. Verfahren zum Zusammenbau eines Maschinenaufbaus nach einem der Ansprüche 1 bis 12, das die folgenden Schritte umfasst:
- Anbringen der ersten, oberen Platte (14) nahe an einem Ende jedes Ständers (12),
- Anbringen der zweiten Platte (15) an Ständern (12) in einem vorbestimmten Abstand vom Ende jedes ständers (12),
- Anbringen der Bauteile der Maschine (M) im Aufnahmebereich, der zwischen der ersten (14) und zweiten (15) Platte entstanden ist, und
- Anbringen der Seitenabdeckfelder (13, 13a) jeweils zwischen zwei aneinander angrenzenden Ständern (12),
**dadurch gekennzeichnet, dass** jedes Abdeckfeld (13, 13a) an einander zugewandten längsverlaufenden U-Profilen oder Haken (22) eingehakt wird, die an einem Hauptabschnitt (19) zweier aneinander angrenzender Ständer (12) vorgesehen sind, um jedes der Felder (13, 13a) unter Zwangsführung zwischen den Ständern (12) zu halten und ihnen gleichzeitig eine Krümmung mit einer Konvexität vom Aufnahmebereich weg zu verleihen.

## Revendications

1. Structure de machine, en particulier pour une machine destinée à manipuler des produits fluides, comprenant :
- un cadre de support de charge comprenant des montants, et
- un ou plusieurs panneaux de recouvrement,
les montants (12) s'étendant dans une direction sensiblement verticale et ayant une extrémité supérieure proche d'une première plaque supérieure sensiblement horizontale (14) ou sur laquelle est fixée cette dernière pour raccorder les montants (12), une deuxième plaque inférieure sensiblement horizontale (15) étant fixée aux mêmes montants (12) pour les raccorder dans une zone sous la première plaque supérieure (14) et ainsi former une zone pour loger le mécanisme de la machine (M), au moins un des panneaux de recouvrement (13, 13a) étant ajusté de manière amovible entre deux montants (12) dans une position de recouvrement pour recouvrir au moins partiellement la zone de logement latéralement, les montants (12) ayant des moyens de raccordement longitudinaux (22, 24) pour retenir lesdits panneaux de recouvrement (13a, 13a), **caractérisée en ce que** lesdits moyens de raccordement (22, 24) sont configurés pour supporter sous contrainte lesdits panneaux de recouvrement (13, 13a) et en même temps pour leur conférer une courbure avec une convexité s'éloignant de la zone de logement.

2. Structure selon la revendication 1, **caractérisée en ce que** lesdits moyens de raccordement comprennent un canal ou des crochets longitudinaux (22) agencés sur des ailes pliées relatives (21) définissant des bords latéraux desdits montants (12), un panneau (13, 13a) étant accroché sur le canal ou lesdits crochets longitudinaux (22) opposés de deux montants adjacents (12).

3. Structure selon la revendication 1 ou 2, **caractérisée en ce que** lesdits moyens de raccordement comprennent une plaque à coins pliés (24) placée entre lesdites plaques horizontales (14, 15) et chacun des montants (12), chacune desdites plaques à coins pliés (24) agissant ensemble avec des ailes (25, 26) agencées le long du périmètre de chacune desdites plaques horizontales (14, 15) pour définir une butée pour un panneau relatif (13, 13a) et, avec ledit canal ou lesdits crochets longitudinaux (22) pour conférer ladite courbure avec la convexité s'éloignant de la zone de logement.

4. Structure selon la revendication 1, **caractérisée en ce qu'**elle comprend trois montants (12).

5. Structure selon l'une quelconque des revendications précédentes, **caractérisée en ce que** la deuxième plaque (15) est fixée dans une zone médiane des montants (12).

6. Structure selon la revendication 5, **caractérisée en ce que** les panneaux de recouvrement (13, 13a) s'étendent verticalement sur une distance qui est sensiblement égale à la distance entre les deux plaques (14, 15).

7. Structure selon la revendication 5, **caractérisée en ce qu'**au moins un panneau latéral (13a) s'étend sur une longueur sensiblement égale à la hauteur du montant (12).

8. Structure selon l'une quelconque des revendications précédentes, **caractérisée en ce qu'**elle a une zone frontale (16) pour un accès de travail aux fonctions des mécanismes de la machine (M) logée dans la structure.

9. Structure selon la revendication 8, **caractérisée en ce qu'**elle a une surface ou un support de travail (17) agencé dans la zone frontale (16), monté de sorte qu'il puisse être retiré ou déplacé pour disparaître ou incliné.

10. Structure selon l'une quelconque des revendications précédentes, **caractérisée en ce que** la première plaque supérieure (14) comprend une pluralité d'ouvertures profilées (27) pour loger et supporter les composants de la machine (M).

11. Structure selon la revendication 10, **caractérisée en ce qu'**elle comprend un élément de recouvrement (28, 45) situé sur la première plaque supérieure (14) pour recouvrir au moins partiellement une ou plusieurs ouvertures profilées (27).

12. Structure selon l'une quelconque des revendications précédentes, **caractérisée en ce qu'**elle comprend des dispositifs d'immobilisation (30) qui raccordent les montants (12) ensemble.

13. Kit d'assemblage pour construire une structure de machine selon l'une quelconque des revendications 1 à 12, la structure comprenant :
- deux montants allongés ou plus (12),
- au moins deux plaques (14, 15) raccordant les montants (12), des éléments de raccordement pour fixer les plaques (14, 15) aux montants (12) à une distance prédéterminée, et
- un ou plusieurs panneaux de recouvrement latéraux (13, 13a), chacun étant conçu pour être retenu entre deux montants (12) ;
**caractérisé en ce que** lesdits montants (12) comprennent des moyens de raccordement (22, 24) configurés pour supporter sous contrainte lesdits panneaux latéraux (13, 13a) et en même temps pour leur conférer une courbure avec une convexité s'éloignant de la zone de logement.

14. Procédé d'assemblage d'une structure de machine selon l'une quelconque des revendications 1 à 12, comprenant les étapes consistant à :
- monter la première plaque supérieure (14) à proximité d'une extrémité de chaque montant (12),
- monter la deuxième plaque (15) sur les montants (12) à une distance prédéterminée de ladite extrémité de chaque montant (12),
- monter les composants de la machine (M) dans la zone de logement formée entre la première (14) et la deuxième (15) plaque, et
- monter les panneaux de recouvrement latéraux (13, 13a) chacun entre deux montants adjacents (12),
**caractérisé en ce que**
chaque panneau de recouvrement (13, 13a) est accroché sur les canaux ou crochets longitudinaux (22) opposés sur une partie principale (19) de deux montants adjacents (12) afin de supporter sous contrainte chacun desdits panneaux (13a, 13a) entre lesdits montants (12) et en même temps leur conférer une courbure avec une convexité s'éloignant de la zone de logement.
